# EUROPÄISCHE PATENTSCHRIFT

(11) **EP 2 603 404 B1**
(45) Veröffentlichungstag und Bekanntmachung des Hinweises auf die Patenterteilung: **11.02.2015**
(21) Anmeldenummer: 11743812.7
(22) Anmeldetag: 10.08.2011
(51) Int. Cl.: B60R 11/04

(54) **NACHRÜSTSYSTEM FÜR EIN KRAFTFAHRZEUG UND VERFAHREN ZUM UNTERSTÜTZEN EINES FAHRERS BEIM FÜHREN EINES KRAFTFAHRZEUGS**
RETROFITTING SYSTEM FOR A MOTOR VEHICLE AND METHOD FOR ASSISTING A DRIVER WHEN DRIVING A MOTOR VEHICLE
SYSTÈME D'ÉQUIPEMENT COMPLÉMENTAIRE POUR UN VÉHICULE AUTOMOBILE ET PROCÉDÉ D'ASSISTANCE AU CONDUCTEUR LORS DU GUIDAGE D'UN VÉHICULE AUTOMOBILE

(30) Priorität: 13.08.2010 DE 102010034262
(43) Veröffentlichungstag der Anmeldung: 19.06.2013
(73) Patentinhaber: Valeo Schalter und Sensoren GmbH, 74321 Bietigheim-Bissingen (DE)
(72) Erfinder: REILHAC, Patrice, 73732 Esslingen (DE)
(86) Internationale Anmeldenummer: PCT/EP2011/063743
(87) Internationale Veröffentlichungsnummer: WO 2012/020042

(56) Entgegenhaltungen:
- WO-A1-2010/040403
- US-A1- 2006 055 565
- US-A1- 2007 047 809

## Beschreibung

Die Erfindung betrifft ein Nachrüstsystem für ein Kraftfahrzeug. Das Nachrüstsystem umfasst ein tragbares Kommunikationsgerät - etwa ein Mobiltelefon - zum Bereitstellen zumindest einer Funktionalität, welche einen Fahrer beim Führen des Kraftfahrzeugs unterstützt. Die Erfindung bezieht sich außerdem auf ein Verfahren zum Unterstützen eines Fahrers eines Kraftfahrzeugs beim Führen des Kraftfahrzeugs durch Bereitstellen zumindest einer Funktionalität mit Hilfe eines tragbaren Kommunikationsgeräts.

Es geht vorliegend um ein Nachrüstsystem, mit welchem ein Kraftfahrzeug aufgerüstet werden kann. Solche Nachrüstsysteme sind bereits aus dem Stand der Technik bekannt. Das Herzstück eines solchen Nachrüstsystems ist in der Regel ein tragbares Kommunikationsgerät, und genauer gesagt ein digitaler Signalprozessor des tragbaren Kommunikationsgeräts. Als tragbares Kommunikationsgerät kann beispielsweise ein Mobiltelefon (smart phone) eingesetzt werden. Es ist bekannt, dass tragbare Kommunikationsgeräte zur Unterstützung des Fahrers beim Führen eines Kraftfahrzeugs verwendet werden können. Beispielsweise ist bekannt, dass tragbare Kommunikationsgeräte einen GPS(Global Positioning System)-Empfänger aufweisen können. Dann haben die tragbaren Kommunikationsgeräte die Funktion eines Navigationssystems und können den Fahrer beim Navigieren unterstützen.

Also gilt das Interesse vorliegend solchen Nachrüstsystemen, die überhaupt keine logische Verbindung zu fahrzeugfesten Komponenten aufweisen. Solche Nachrüstsysteme sind vollständig unabhängig von der Fahrzeugarchitektur - d. h. unabhängig von gegebenenfalls im Fahrzeug vorhandenen Fahrerassistenzsystemen und/oder Kommunikationssystemen. Allenfalls können solche Nachrüstsysteme mit einem Bordnetz verbunden werden, nämlich zum Zwecke der Energieversorgung.

Neben dem tragbaren Kommunikationsgerät können auch weitere Nachrüstkomponenten eingesetzt werden, mit denen das Kraftfahrzeug nachgerüstet werden kann. Es geht hier beispielsweise um separate Kameras oder aber separate Abstandssensoren, die Informationen über eine Umgebung des Kraftfahrzeugs erfassen und diese Informationen an das tragbare Kommunikationsgerät übertragen können. Solche Nachrüstkomponenten sind auch vollkommen unabhängig von der Fahrzeugarchitektur und kommunizieren lediglich mit dem tragbaren Kommunikationsgerät, nämlich beispielsweise über eine Bluetooth®-Verbindung. Das tragbare Kommunikationsgerät verarbeitet dann die Daten der Nachrüstkomponenten und stellt anhand dieser Daten Funktionalitäten bereit, welche den Fahrern beim Führen des Kraftfahrzeugs unterstützen. Denkbar ist beispielsweise eine Funktionalität, bei welcher der Fahrer durch das tragbare Kommunikationsgerät beim Verlassen einer Spur gewarnt wird.

WO 2010/040403 A1 offenbart ein Nächrüstsystem für ein Kraftfahrzeug, nach dem Oberbegriff des Anspruchs 1, sowie ein Verfahren zum Unterstützen eines Fahrers nach dem Oberbegriff des Anspruchs 13.

US2007/047809 A1 offenbart ein Bordsystem mit einer Kamera und einer Steuereinheit, wobei die Steuereinheit anhand der Bilddaten der Kamera auf den Bewegungszustand des Scheibenwischers zurückschließen kann.

Aus der Druckschrift DE 10 2004 008 867 A1 ist ein Bildverarbeitungssystem für ein Fahrzeug bekannt, mit welchem durch eine Kamera gewonnene Bilder von einer Umgebung des Kraftfahrzeugs oder vom Innenraum des Fahrzeugs verarbeitet werden. Ein Kleinstcomputer - z. B. ein Mobiltelefon - übernimmt dabei die Verarbeitung der Bilddaten. Auf einem Bildschirm des Mobiltelefons werden Bilder angezeigt, die auf den Bilddaten der Kamera beruhen. Das Bildverarbeitungssystem einschließlich des Mobiltelefons und der Kamera ist ein Teil eines in das Fahrzeug eingebauten Fahrerassistenzsystems. Dies bedeutet, dass der Fahrer erst dann durch das Bildverarbeitungssystem beim Führen des Fahrzeugs unterstützt wird, wenn das Bildverarbeitungssystem mit dem fahrzeugfesten Fahrerassistenzsystem zusammenwirkt.

Es ist Aufgabe der Erfindung, einen Weg aufzuzeigen, wie der Einsatzbereich eines Nachrüstsystems der eingangs genannten Gattung im Hinblick auf die Unterstützung eines Fahrers beim Führen eines Kraftfahrzeugs erweitert werden kann.

Diese Aufgabe wird erfindungsgemäß durch ein Nachrüstsystem mit den Merkmalen gemäß Patentanspruch 1, wie auch durch ein Verfahren mit den Merkmalen gemäß Patentanspruch 14 gelöst. Vorteilhafte Ausführungen der Erfindung sind Gegenstand der abhängigen Patentansprüche und der Beschreibung.

Ein erfindungsgemäßes Nachrüstsystem für ein Kraftfahrzeug umfasst ein tragbares Kommunikationsgerät, welches zum Bereitstellen zumindest einer Funktionalität ausgebildet ist, welche einen Fahrer beim Führen des Kraftfahrzeugs unterstützt. Das tragbare Kommunikationsgerät kann anhand von Bilddaten einer Kamera - insbesondere alleine anhand der Bilddaten - auf einen Bewegungszustand eines Scheibenwischers des Kraftfahrzeugs zurückschließen und diesen Bewegungszustand beim Bereitstellen der zumindest einen Funktionalität berücksichtigen.

Der Einsatzbereich des Nachrüstsystems wird somit im Vergleich zum Stand der Technik dadurch erweitert, dass das tragbare Kommunikationsgerät dazu ausgelegt ist, den Bewegungszustand des Scheibenwischers abhängig von Bilddaten einer optischen Kamera zu bestimmen und diesen Bewegungszustand beim Unterstützen des Fahrers zu berücksichtigen. Auf diese Weise kann das tragbare Kommunikationsgerät Rückschlüsse darauf ziehen, ob es regnet oder nicht; es gelingt auch, eine momentane Intensität eines Regens abhängig von dem Bewegungszustand des Scheibenwischers zu ermitteln. In vorteilhafter Weise können somit die Informationen über die Regenintensität zum Unterstützen des Fahrers beim Führen des Kraftfahrzeugs verwendet werden. Beispielsweise kann das tragbare Kommunikationsgerät den Fahrer über gegebenenfalls - je nach Aufenthaltsland - vorgesehene Geschwindigkeitsbegrenzungen aufgrund des Regens informieren. Der Fahrer kann durch das Nachrüstsystem auch dann beim Führen des Kraftfahrzeugs unterstützt werden, wenn das Fahrzeug über kein fahrzeugfestes Fahrerassistenzsystem verfügt. Insbesondere können mit dem Nachrüstsystem auch ältere Fahrzeug aufgerüstet werden, wie auch solche, die aufgrund ihres geringen Preises werkseitig über keine Fahrerassistenzsysteme verfügen. Es genügt lediglich das tragbare Kommunikationsgerät sowie gegebenenfalls weitere Nachrüstkomponenten, die durch das Zusammenwirken miteinander den Fahrer beim Führen des Fahrzeugs unterstützen.

Das Nachrüstsystem ist insbesondere unabhängig von der Fahrzeugarchitektur, d. h. von gegebenenfalls im Fahrzeug vorhandenen Fahrerassistenzsystemen und/oder Kommunikationssystemen. Das Nachrüstsystem weist bevorzugt keine logische Verbindung zu fahrzeugfesten Komponenten auf. Es kann lediglich eine elektrische Verbindung zu einem Bordnetz bestehen, um das Nachrüstsystem mit Elektrischer Energie aus dem Bordnetz zu versorgen. Wird neben dem tragbaren Kommunikationsgerät auch zumindest eine weitere Nachrüstkomponente eingesetzt, so können das tragbare Kommunikationsgerät und die zumindest eine Nachrüstkomponente unter Umgehung von gegebenenfalls im Fahrzeug bereits vorhandenen Kommunikationsbussen miteinander kommunizieren - nämlich vorzugsweise unmittelbar über jeweilige Kommunikationsschnittstellen.

Das tragbare Kommunikationsgerät kann ein Mobiltelefon oder ein mobiler bzw. tragbarer Personalcomputer (so genannter PDA, Personal Digital Assistant) sein. Derartige Kommunikationsgeräte verfügen üblicherweise über Kommunikationsschnittstellen, die zur Kommunikation - z. B. mit einer weiteren Nachrüstkomponente des Nachrüstsystems -geeignet sind. Außerdem sind Mobiltelefone, wie auch mobile Personalcomputer, in vielfältiger Ausgestaltung auf dem Markt erhältlich. Verfügt der Fahrer beispielsweise bereits über ein Mobiltelefon, so braucht er lediglich eine entsprechende Software, die dann - wenn sie auf dem tragbaren Kommunikationsgerät ausgeführt wird - anhand der Bilddaten den Bewegungszustand des Scheibenwischers bestimmen und den Fahrer unter Berücksichtigung des Bewegungszustand unterstützen kann. Der Fahrer braucht also lediglich ein Computerprogramm auf seinem Mobiltelefon zu installieren. Z. B. kann es möglich sein, ein solches Computerprogramm auf einem Internetserver zur Verfügung zu stellen. Der Fahrer kann sich dann dieses Computerprogramm herunterladen und auf seinem Mobiltelefon oder dem tragbaren Personal Computer installieren.

Also kann das tragbare Kommunikationsgerät anhand von Bilddaten einer Kamera auf den Bewegungszustand des Scheibenwischers zurückschließen. Bezüglich der Kamera sind im Prinzip zwei unterschiedliche Ausführungsformen vorgesehen:
Zum einen kann das Nachrüstsystem eine vom tragbaren Kommunikationsgerät separate Kamera aufweisen. Diese Kamera ist dann eine Nachrüstkomponente, mit welcher das Kraftfahrzeug nachgerüstet werden kann. Bevorzugt ist die separate Kamera zum Platzieren hinter einer Windschutzscheibe des Kraftfahrzeugs ausgebildet, mit welcher der Scheibenwischer in Kontakt steht. Diese Kamera kann Bilddaten an das tragbare Kommunikationsgerät übertragen; dann ist das tragbare Kommunikationsgerät dazu ausgelegt, diese Bilddaten zu empfangen und anhand dieser Bilddaten den Bewegungszustand des Scheibenwischers zu bestimmen. Der Einsatz einer separaten Kamera hat den Vorteil, dass solche Kameras Bilder hoher Qualität und hoher Auflösung aufzeichnen können, so dass der Bewegungszustand mit hoher Genauigkeit ermittelt werden kann - es kann beispielsweise auch die Frequenz der Bewegung ermittelt werden. Diese Ausführungsform hat außerdem den Vorteil, dass die separate Kamera Bilder von einem Umgebungsbereich vor dem Kraftfahrzeug erfassen und an das tragbare Kommunikationsgerät übertragen kann; dann kann das tragbare Kommunikationsgerät anhand dieser Bilder verschiedenste Funktionalitäten bereitstellen, die den Fahrer beim Führen des Kraftfahrzeugs unterstützen. Es ist beispielsweise möglich, den Fahrer beim Verlassen einer Spur zu warnen und/oder den Fahrer über die Anwesenheit von Hindernissen vor dem Kraftfahrzeug zu warnen. Anhand von Bildern der Kamera kann das tragbare Kommunikationsgerät auch Verkehrsschilder erkennen und den Fahrer über die erkannten Verkehrsschilder informieren.

Ergänzend oder alternativ kann das tragbare Kommunikationsgerät eine in dieses integrierte Kamera umfassen, die zum Erfassen von Bilddaten ausgebildet ist. Das tragbare Kommunikationsgerät kann dann anhand der Bilddaten der integrierten Kamera auf den Bewegungszustand des Scheibenwischers zurückschließen. Diese Ausführungsform wiederum hat den Vorteil, dass insbesondere keine externen Kameras zur Bestimmung des Bewegungszustands erforderlich sind; das Nachrüstsystem kommt bei der Bestimmung des Bewegungszustands ohne zusätzliche Kameras aus, und es genügt lediglich das tragbare Kommunikationsgerät.

Prinzipiell kann das Nachrüstsystem also ausschließlich das tragbare Kommunikationsgerät aufweisen, welches sowohl die Bilddaten erfasst als auch den Fahrer beim Führen des Kraftfahrzeugs unterstützt. Es kann sich jedoch als vorteilhaft erweisen, wenn neben dem tragbaren Kommunikationsgerät zusätzliche Nachrüstkomponenten eingesetzt werden, die dann mit dem tragbaren Kommunikationsgerät kommunizieren. Diese Kommunikation kann über jeweilige Kommunikationsschnittstellen erfolgen, nämlich eine Kommunikationsschnittstelle der Nachrüstkomponente und eine Kommunikationsschnittstelle des tragbaren Kommunikationsgerätes. Eine Nachrüstkomponente kann beispielsweise die genannte Kamera sein, deren Bilddaten zur Bestimmung des Bewegungszustands verwendet werden. Es können aber auch weitere Nachrüstkomponenten vorgesehen sein, etwa ein Ultraschallsensor und/oder ein Radargerät und/oder eine weitere Kamera zum Anbringen an einem Karosserieteil des Kraftfahrzeugs und/oder ein separates Display und/oder ein Projektor (Head-up-Display) und/oder eine am Fahrzeug befestigbare Leuchte, insbesondere eine Nebelleuchte und/oder eine LED-Tagfahrleuchte und/oder ein Zusatzscheinwerfer für Fernlicht, und/oder ein Vibrationsaktuator zur lösbaren Montage an einem Fahrersitz. All diese Nachrüstkomponenten können prinzipiell in zwei verschiedene Gruppen untereinander unterteilt werden: eine erste Gruppe von Nachrüstkomponenten, die Daten über eine Umgebung erfassen und diese Daten an das tragbare Kommunikationsgerät übertragen, sowie eine zweite Gruppe von Nachrüstkomponenten, die verschiedene Funktionalitäten zur Fahrerunterstützung bereitstellen. Wird eine Nachrüstkomponente der ersten Gruppe eingesetzt, so kann das tragbare Kommunikationsgerät selbst anhand der Daten der Nachrüstkomponente sowie unter Berücksichtigung des Bewegungszustands des Scheibenwischers eine Funktionalität zur Fahrerunterstützung bereitstellen und/oder eine Nachrüstkomponente der zweiten Gruppe zur Bereitstellung einer solchen Funktionalität ansteuern. Ist lediglich eine Nachrüstkomponente der zweiten Gruppe vorhanden, so kann das tragbare Kommunikationsgerät selbst - etwa mit Hilfe einer integrierten Kamera - Daten über die Umgebung erfassen und eine Nachrüstkomponente der zweiten Gruppe zur Bereitstellung einer Funktionalität ansteuern und/oder alleine eine solche Funktionalität bereitstellen.

Unter einer Nachrüstkomponente wird bevorzugt eine solche Komponente verstanden, die in das Kraftfahrzeug nachträglich lösbar oder unlösbar eingebaut werden kann, nämlich in einem Innenraum - z. B. mit Hilfe einer Halterung - oder an einer äußeren Oberfläche des Fahrzeugs - etwa an einem Stoßfänger oder einem Außenspiegel. Es ist somit grundsätzlich sowohl eine lösbare als auch eine unlösbare Montage einer Nachrüstkomponente sinnvoll möglich. Es genügt somit, die zumindest eine Nachrüstkomponente nachträglich am Fahrzeug zu montieren; das Nachrüstsystem kommt dann ohne eine Verbindung zu einem gegebenenfalls vorhandenen Kommunikationsbus aus. Es kann gegebenenfalls lediglich ein Stromanschluss seitens des Fahrzeugs für die zumindest eine Nachrüstkomponente und/oder für das tragbare Kommunikationsgerät bereitgestellt werden, um die Nachrüstkomponente und/oder das tragbare Kommunikationsgerät mit elektrischer Energie aus einem Bordnetz des Fahrzeugs zu versorgen. Ist eine Nachrüstkomponente eine für den Innenraum des Fahrzeugs vorgesehene Komponente, so wird sie im Innenraum bevorzugt mit Hilfe einer Halterung abnehmbar montiert - d. h. der Fahrer kann die Nachrüstkomponente jederzeit beispielsweise durch Herausziehen oder dergleichen demontieren, ohne sie zu zerstören. Wird eine Nachrüstkomponente an einer äußeren Oberfläche des Fahrzeugs - etwa an der Karosserie - montiert, so kann diese Nachrüstkomponente beispielsweise über einen Halter in einer Aufnahmeöffnung eines Stoßfängers verrastet werden. Die Nachrüstkomponente kann aber auch mittels einer Klebeverbindung montiert werden. Die Montage einer Nachrüstkomponente an der äußeren Oberfläche des Fahrzeugs kann auch über Rast- und/oder Schraubmittel erfolgen bzw. die Nachrüstkomponente kann mit Hilfe von Rast- und/oder Schraubmitteln an der Karosserie befestigt werden, wobei dann die Befestigungsstellen innenseitig, d. h. verdeckt, angeordnet sein können.

Wird neben dem tragbaren Kommunikationsgerät auch eine Nachrüstkomponente eingesetzt, so kann die Kommunikation zwischen dem tragbaren Kommunikationsgerät und der Nachrüstkomponente prinzipiell drahtgebunden erfolgen. Hier kann beispielsweise eine gemeinsame Halterung für das tragbare Kommunikationsgerät und die Nachrüstkomponente bereitgestellt werden, und die drahtgebundene Kommunikationsverbindung kann in die Halterung integriert sein. Es hat sich jedoch als besonders vorteilhaft herausgestellt, wenn die jeweiligen Kommunikationsschnittstellen zur drahtlosen Datenübertragung ausgebildet sind. Dann kommt das Nachrüstsystem ohne eine elektrische Verbindung zwischen dem tragbaren Kommunikationsgerät und einer Nachrüstkomponente aus; das tragbare Kommunikationsgerät kann z. B. mittels einer Halterung im Innenraum des Fahrzeugs montiert werden, während die Nachrüstkomponente an einer äußeren Oberfläche des Fahrzeugs montiert werden kann. Insbesondere können die Kommunikationsschnittstellen die Daten gemäß einem Standard der IEEE 802.11-Familie (wireless local area network) und/oder gemäß einem Standard der IEEE 802.15-Familie (bluetooth®) übertragen. Diese Ausführungsform macht sich die Tatsache zu nutze, dass tragbare Kommunikationsgeräte üblicherweise bereits über Kommunikationsschnittstellen verfügen, die zur Übertragung von Daten gemäß einem Standard der oben genannten Familien geeignet sind. Es kann somit für das Nachrüstsystem ein marktübliches tragbares Kommunikationsgerät verwendet werden. Erfolgt die Datenübertragung gemäß einem Standard der oben genannten Familien, so kann das tragbare Kommunikationsgerät dazu ausgelegt sein, eine drahtlose Datenverbindung zu der Nachrüstkomponente zu erkennen und nach Erkennen einer Datenverbindung automatisch eine Funktionalität bereitstellen, die den Fahrer beim Führen des Fahrzeugs unterstützt. Gleichfalls kann das tragbare Kommunikationsgerät dazu ausgelegt sein, das Bereitstellen der Funktionalität dann anzuhalten, wenn die Kommunikationsverbindung unterbrochen wird, nämlich z.B. seitens der Nachrüstkomponente. Ohne eine Eingabe seitens des Fahrers kann somit die Unterstützung des Fahrers aktiviert bzw. deaktiviert werden, nämlich abhängig von dem Vorhandensein der drahtlosen Kommunikationsverbindung zwischen dem tragbaren Kommunikationsgerät und der Nachrüstkomponente.

Das tragbare Kommunikationsgerät kann anhand der Bilddaten - der separaten Kamera und/oder der integrierten Kamera - den Bewegungszustand des Scheibenwischers bestimmen. Dies kann prinzipiell beinhalten, dass das tragbare Kommunikationsgerät anhand der Bilddaten feststellt, ob sich der Scheibenwischer bewegt oder nicht und somit ob es regnet oder nicht. Es erweist sich jedoch als besonders vorteilhaft, wenn das tragbare Kommunikationsgerät anhand der Bilddaten auf eine Frequenz und/oder eine Geschwindigkeit einer Bewegung des Scheibenwischers zurückschließen kann. Dies kann beispielsweise so aussehen, dass das tragbare Kommunikationsgerät die jeweils augenblickliche Frequenz und/oder die Geschwindigkeit bestimmt, welche betragsmäßig beliebig sein kann. Ergänzend oder alternativ kann das tragbare Kommunikationsgerät anhand der Bilddaten auf einen Betriebsmodus des Scheibenwischers zurückschließen; es können beispielsweise mindestens drei, insbesondere mindestens vier, verschiedene Betriebsmodi vorgesehen sein, nämlich ein Betriebsmodus "Scheibenwischer deaktiviert" und/oder ein Betriebsmodus "unterbrochener Betrieb" und/oder ein Betriebsmodus "langsame Bewegung" und/oder ein Betriebsmodus "schnelle Bewegung". Das tragbare Kommunikationsgerät kann somit auf eine Regenintensität zurückschließen und unter Berücksichtigung der Regenintensität zumindest eine Funktionalität bereitstellen, die den Fahrer unterstützt.

Die Bestimmung des Bewegungszustands des Scheibenwischers kann beispielsweise so aussehen, dass das tragbare Kommunikationsgerät eine zeitliche Abfolge von Bildern einer Windschutzscheibe daraufhin überprüft, ob eine zeitliche Veränderung der Bilder vorliegt. Bei einem aktivierten Scheibenwischer erkennt das tragbare Kommunikationsgerät eine Bewegung des Scheibenwischers im Bild, nämlich zunächst nach oben und kurz danach nach unten oder umgekehrt, je nach Ausführung des Scheibenwischers.

Wie bereits ausgeführt, kann das Nachrüstsystem zumindest eine vom tragbaren Kommunikationsgerät separate Nachrüstkomponente aufweisen, mit welcher das Kraftfahrzeug nachgerüstet werden kann. Eine solche Nachrüstkomponente kann beispielsweise eine Erfassungseinrichtung sein, welche zum Erfassen von Daten über einen Umgebungsbereich des Kraftfahrzeugs und zum Übertragen dieser Daten an das tragbare Kommunikationsgerät dient. Das tragbare Kommunikationsgerät kann dann abhängig von diesen Daten sowie unter Berücksichtigung des Bewegungszustands des Scheibenwischers zumindest eine Funktionalität bereitstellen, die den Fahrer beim Führen des Fahrzeugs unterstützt. Als Erfassungseinrichtung kann beispielsweise eine Kamera und/oder ein Ultraschallsensor und/oder ein Radargerät eingesetzt werden. Auf diese Weise kann das tragbare Kommunikationsgerät den Fahrer beispielsweise über die Anwesenheit von Hindernissen informieren. Z. B. kann das tragbare Kommunikationsgerät den Fahrer dann warnen, wenn eine Entfernung zwischen einem Hindernis und dem Kraftfahrzeug eine vorgegebene Schwelle unterschreitet, die in Abhängigkeit von dem Bewegungszustand des Scheibenwischers und somit in Abhängigkeit von der Regenintensität eingestellt werden kann.

Das tragbare Kommunikationsgerät kann auch abhängig von den Daten der Erfassungseinrichtung sowie unter Berücksichtigung des Bewegungszustands des Scheibenwischers Steuerdaten erzeugen und die Steuerdaten an zumindest eine weitere Nachrüstkomponente übertragen, um hierdurch die zumindest eine weitere Nachrüstkomponente zur Bereitstellung einer Funktionalität zur Fahrerunterstützung anzusteuern. Beispielsweise kann eine Leuchte als Nachrüstkomponente in Abhängigkeit von dem Bewegungszustand des Scheibenwischers angesteuert werden.

Es ist auch möglich, in Abhängigkeit von dem Bewegungszustand des Scheibenwischers ein Display als Nachrüstkomponente anzusteuern, nämlich beispielsweise derart, dass durch das tragbare Kommunikationsgerät erkannte Verkehrsschilder und/oder gegebenenfalls vorgesehene Geschwindigkeitsbegrenzungen wegen des Regens auf dem Display angezeigt werden.

Also kann das tragbare Kommunikationsgerät in einer Ausführungsform anhand der Daten der Erfassungseinrichtung ein fahrzeugexternes Hindernis erkennen. Dann kann das tragbare Kommunikationsgerät unter Berücksichtigung des Bewegungszustands des Scheibenwischers eine Information über das erkannte Hindernis ausgeben. Der Fahrer wird somit über das Hindernis informier, nämlich auch unter Berücksichtigung des Bewegungszustands des Scheibenwischers bzw. der Regenintensität. Dies kann beispielsweise so aussehen, dass das tragbare Kommunikationsgerät anhand der Daten der Erfassungseinrichtung eine Entfernung zwischen dem Hindernis und dem Kraftfahrzeug bestimmt und den Fahrer dann warnt, wenn die Entfernung eine Schwelle unterschreitet. Die Schwelle für die Entfernung kann in Abhängigkeit von dem Bewegungszustand des Scheibenwischers eingestellt werden. Auf diese Weise kann die Sicherheit beim Führen des Kraftfahrzeugs erhöht werden; der Fahrer kann nämlich bei einem relativ starken Regen deutlich früher als bei einem schwachen Regen oder bei einer trockenen Straße gewarnt werden. Der Fahrer hat dann mehr Zeit, das Kraftfahrzeug abzubremsen, um eine Kollision mit dem Hindernis zu vermeiden.

Es kann als eine Nachrüstkomponente - und auch als Erfassungseinrichtung - eine Frontkamera eingesetzt werden, die zur Aufnahme von Bilddaten über einen Umgebungsbereich des Kraftfahrzeugs, insbesondere vor dem Kraftfahrzeug, dient. Die Frontkamera kann zum Platzieren hinter der Windschutzscheibe ausgebildet sein. Sie kann auch diejenige externe Kamera sein, durch welche die Bilddaten zur Bestimmung des Bewegungszustands des Scheibenwischers aufgezeichnet werden. Die Bilddaten der Frontkamera können an das tragbare Kommunikationsgerät übertragen werden. Das tragbare Kommunikationsgerät kann dann abhängig von den Bilddaten der Frontkamera sowie unter Berücksichtigung des Bewegungszustands des Scheibenwischers zumindest eine Funktionalität bereitstellen, die den Fahrer unterstützt. Durch Einsatz einer Frontkamera können verschiedenste Funktionalitäten zur Fahrerunterstützung bereitgestellt werden, nämlich durch das tragbare Kommunikationsgerät anhand der Bilddaten der Frontkamera.

Beispielsweise kann das tragbare Kommunikationsgerät anhand der Bilddaten ein Verkehrszeichen erkennen. Dies kann so aussehen, dass das tragbare Kommunikationsgerät zum Erkennen eines Verkehrszeichens die Bilddaten der Fronkamera einer Mustererkennung unterzieht. Dann kann das tragbare Kommunikationsgerät eine Information über das Verkehrszeichen ausgeben, nämlich unter Berücksichtigung des Bewegungszustands des Scheibenwischers. Beispielsweise kann das tatsächliche Verkehrszeichen auf einem Display des tragbaren Kommunikationsgerätes und/oder auf einem Display als Nachrüstkomponente angezeigt werden. Wird kein Regen erkannt, so kann dieses Verkehrszeichen unverändert angezeigt werden. Wird hingegen ein Regen anhand des Bewegungszustands des Scheibenwischers detektiert, so kann auch ein verändertes bzw. "verfälschtes" Verkehrszeichen angezeigt werden. Wird beispielsweise ein Verkehrszeichen betreffend eine Geschwindigkeitsbegrenzung bei einem Regen erkannt, so kann ein geringerer Grenzwert für die Geschwindigkeit als der tatsächlich erkannte Grenzwert angezeigt werden. Diese Ausführungsform beruht auf der Tatsache, dass in bestimmten Ländern beim Regen eine geringere maximale Geschwindigkeit als bei einer trockenen Straße erlaubt ist.

Anhand der Bilddaten der Frontkamera kann das tragbare Kommunikationsgerät auch ein fahrzeugexternes Hindernis erkennen. Das tragbare Kommunikationsgerät kann dann den Fahrer über das erkannte Hindernis informieren, nämlich unter Berücksichtigung des Bewegungszustands des Scheibenwischers. Auch hier kann der Fahrer bei einem Regen beispielsweise deutlich früher vor der Anwesenheit des Hindernisses gewarnt werden als bei einer trockenen Straße, so dass die Sicherheit beim Führen des Kraftfahrzeugs erhöht werden kann.

Ein erfindungsgemäßes Verfahren ist zum unterstützen eines Fahrers eines Kraftfahrzeugs beim Führen des Kraftfahrzeugs ausgelegt, nämlich durch bereitstellen zumindest einer Funktionalität mit Hilfe eines tragbaren Kommunikationsgeräts. Anhand von Bilddaten einer Kamera wird durch das tragbare Kommunikationsgerät auf einen Bewegungszustand eines Scheibenwischers des Kraftfahrzeugs zurück geschlossen, und dieser Bewegungszustand wird beim Bereitstellen der zumindest einen Funktionalität berücksichtigt.

Erfindungsgemäß wird darüber hinaus ein Speichermedium mit einem gespeicherten Computerprogramm bereitgestellt, welches - wenn es auf einem tragbaren Kommunikationsgerät ausgeführt wird - dieses Kommunikationsgerät dazu veranlasst, anhand von Bilddaten einer Kamera auf einen Bewegungszustand eines Scheibenwischers zurück zu schließen und unter Berücksichtigung des Bewegungszustands eine Funktionalität bereitzustellen, die einen Fahrer eines Kraftfahrzeugs beim Führen des Kraftfahrzeugs unterstützt. Das Computerprogramm kann das tragbare Kommunikationsgerät dazu veranlassen, das erfindungsgemäße Verfahren durchzuführen.

Die mit Bezug auf das erfindungsgemäße Nachrüstsystem vorgestellten bevorzugten Ausführungsformen und deren Vorteile gelten entsprechend für das erfindungsgemäße Verfahren sowie für das erfindungsgemäße Speichermedium mit dem gespeicherten Computerprog ramm.

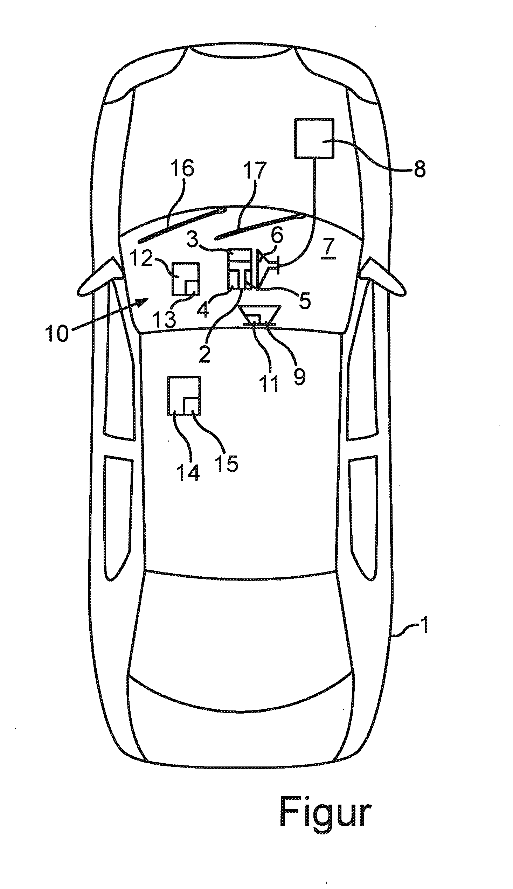

Weitere Merkmale der Erfindung ergeben sich aus den Ansprüchen, der Figur und der Figurenbeschreibung. Alle vorstehend in der Beschreibung genannten Merkmale und Merkmalskombinationen sowie die in der Figurenbeschreibung genannten und/oder in der Figur alleine gezeigten Merkmale und Merkmalskombinationen sind nicht nur in der jeweils angegeben Kombination, sondern auch in anderen Kombinationen oder aber in Alleinstellung verwendbar.

Die Erfindung wird nun anhand eines bevorzugten Ausführungsbeispiels näher erläutert, wie auch unter Bezugnahme auf die beigefügte Zeichnung. Die einzige Figur zeigt in schematischer Darstellung ein Kraftfahrzeug mit einem Nachrüstsystem gemäß einer Ausführungsform der Erfindung.

Ein in der Figur in schematischer Darstellung gezeigtes Kraftfahrzeug 1 ist ein Personenkraftwagen. Das Kraftfahrzeug 1 wird mit einem Nachrüstsystem 10 aufgerüstet, welches zum unterstützen eines Fahrers beim Führen des Kraftfahrzeugs 1 dient. Mit dem Nachrüstsystem wird das Kraftfahrzeug 1 nachträglich aufgerüstet, d. h. das Nachrüstsystem 10 war im Kraftfahrzeug 1 werkseitig noch nicht vorhanden.

Das Nachrüstsystem 10 umfasst ein tragbares Kommunikationsgerät 2, welches im Ausführungsbeispiel ein Mobiltelefon sein kann. Das tragbare Kommunikationsgerät 2 weist ein Display 3 auf, wie auch eine Kommunikationsschnittstelle 4, die Daten empfangen und senden kann, nämlich gemäß einem WLAN-Kommunikationsstandard und/oder einen Bluetooth®-Kommunikationsstandard. Das tragbare Kommunikationsgerät 2 kann ein marktübliches Mobiltelefon sein, wie es in vielfältiger Ausgestaltung auf dem Markt erhältlich ist. Das tragbare Kommunikationsgerät 2 umfasst eine mit der Kommunikationsschnittstelle 4 gekoppelte Recheneinrichtung 5, die zum Verarbeiten von Daten dient. Die Recheneinrichtung 5 kann beispielsweise einen digitalen Signalprozessor beinhalten. Das Nachrüstsystem 10 umfasst eine Halterung 6, mittels welcher das tragbare Kommunikationsgerät 2 an einer Windschutzscheibe 7 im Innenraum des Kraftfahrzeugs 1 befestigt werden kann. Die Halterung kann einen Versorgungsanschluss aufweisen, über welchen das tragbare Kommunikationsgerät 2 mit elektrischer Energie versorgt werden kann. Hierzu ist die Halterung 6, und genauer gesagt der Versorgungsanschluss der Halterung 6 über eine elektrische Leitung mit einem Bordnetz 8 des Kraftfahrzeugs 1 elektrisch verbunden. Diese elektrische Verbindung ist lösbar, d. h. die Halterung 6 kann demontiert und aus dem Kraftfahrzeug 1 entnommen werden. Die Halterung 6 kann an der Windschutzscheibe 7 beispielsweise mit Hilfe eines Saugnapfs befestigt werden.

Das Nachrüstsystem 10 umfasst außerdem eine Frontkamera 9, die eine entsprechende Kommunikationsschnittstelle 11 zur drahtlosen Datenübertragung gemäße einem Standard der oben genannten Familien umfasst. Über die Kommunikationsschnittstellen 4, 11 können das tragbare Kommunikationsgerät 2 und die Frontkamera 9 miteinander kommunizieren, nämlich Daten austauschen. Die Frontkamera 9 ist hinter der Windschutzscheibe 7 im Innenraum des Kraftfahrzeugs 1 unmittelbar unter einem Fahrzeughimmel platziert und erfasst einen Bereich beispielsweise bis zu 10 m vor dem Kraftfahrzeug 1. Die Frontkamera 9 kann eine CMOS-Kamera sein. Sie erfasst Bilddaten über den Bereich vor dem Kraftfahrzeug 1 und überträgt die Bilddaten an das Mobiltelefon 2, nämlich über die jeweiligen Kommunikationsschnittstellen 4, 11. Auch die Frontkamera 9 kann an der Windschutzscheibe 7 mithilfe einer Halterung platziert werden. Es ist auch sinnvoll möglich, eine gemeinsame Halterung 6 für das tragbare Kommunikationsgerät 2 und die Frontkamera 9 bereitzustellen. Dann kann alternativ zu einer drahtlosen Datenübertragung oder ergänzend dazu auch eine drahtgebundene Datenübertragung zwischen dem tragbaren Kommunikationsgerät 2 und der Frontkamera 9 erfolgen, nämlich über eine in die Halterung 6 integrierte elektrische Verbindung.

Das Nachrüstsystem 10 kann außerdem eine Anzeigeeinrichtung 12 umfassen, nämlich insbesondere ein vom tragbaren Kommunikationsgerät 2 separates Display und/oder einen Bildprojektor (Head-up-Display). Mittels eines Bildprojektors können dann Bilder mit Informationen an die Windschutzscheibe 7 projiziert werden. Die Anzeigeeinrichtung 12 kann im Innenraum des Kraftfahrzeugs 1 lösbar montiert werden, nämlich z. B. an einer Instrumententafel. Wird ein Bildprojektor verwendet, so können mithilfe dieser Nachrüstkomponente wichtige Informationen direkt in das Sichtfeld des Fahrers gebracht werden. Die Anzeigeeinrichtung 12 umfasst eine Kommunikationsschnittstelle 13, über welche die Anzeigeeinrichtung 12 Daten mit Informationen von dem tragbaren Kommunikationsgerät 2 empfangen kann. Somit kann das tragbare Kommunikationsgerät 2 die Anzeigeeinrichtung 12 ansteuern, nämlich durch Übertragung von Daten mit Informationen, die durch die Anzeigeeinrichtung 12 angezeigt werden sollen.

Das Nachrüstsystem 10 kann auch einen Vibrationsaktuator 14 beinhalten. Der Vibrationsaktuator 14 kann an einem Fahrersitz und/oder an einem Bremspedal nachträglich und lösbar montiert werden. Der Vibrationsaktuator 14 umfasst eine Kommunikationsschnittstelle 15, über welche der Vibrationsaktuator 14 die Steuerdaten vom tragbaren Kommunikationsgerät 2 empfangen kann. Somit kann das tragbare Kommunikationsgerät 2 den Vibrationsaktuator 14 ansteuern und somit den Fahrer z. B. vor einer erkannten Gefahr warnen, nämlich auf haptischem Wege.

Die Frontkamera 9, die Anzeigeeinrichtung 12 und der Vibrationsaktuator 14 sind beispielhafte Nachrüstkomponenten, mit denen das Kraftfahrzeug 1 nachträglich aufgerüstet werden kann. Diese Nachrüstkomponenten sowie das tragbare Kommunikationsgerät 2 weisen keine logische Verbindung zu fahrzeugfesten und werkseitig vorhandenen Komponenten des Kraftfahrzeugs 1 auf. Das Nachrüstsystem 10 funktioniert also vollständig unabhängig von gegebenenfalls im Kraftfahrzeug 1 vorhandenen weiteren Fahrerassistenzsystemen sowie auch unabhängig von der Fahrzeugarchitektur. Das Nachrüstsystem 10 kann gegebenenfalls auch weitere Nachrüstkomponenten beinhalten, wie beispielsweise Leuchten, Abstandssensoren und dergleichen, die dann auch mit dem tragbare Kommunikationsgerät 2 drahtlos kommunizieren.

Wird das tragbare Kommunikationsgerät 2 in die Halterung 6 eingesetzt, so kann der Fahrer beim Führen des Kraftfahrzeugs 1 unterstützt werden. Die Aktivierung der Unterstützung kann auch davon abhängig gemacht werden, ob eine Kommunikationsverbindung (Buetooth und/oder WLAN) zwischen einer der Nachrüstkomponenten und dem tragbaren Kommunikationsgerät 2 aufgebaut ist oder nicht.

Die Frontkamera 9 überträgt Bilddaten an das Mobiltelefon 2. Die Frontkamera 9 erfasst auch zumindest einen Bereich der Windschutzscheibe 7, insbesondere die gesamte Windschutzscheibe 7. Die Frontkamera 9 kann derart angeordnet sein, dass sie zumindest denjenigen Bereich der Windschutzscheibe 7 erfasst, welcher mit einem Scheibenwischer 16, 17 gesäubert wird.

Das tragbare Kommunikationsgerät 2 empfängt Bilddaten der Frontkamera 9 und kann anhand dieser Bilddaten feststellen, ob die Scheibenwischer 16, 17 in Betrieb sind oder nicht. Und zwar kann das Kommunikationsgerät 2 einen Bewegungszustand der Scheibenwischer 16, 17 bestimmen. Prinzipiell kann dieser Bewegungszustand binär ermittelt werden, d. h. das Kommunikationsgerät 2 kann lediglich feststellen, ob die Scheibenwischer 16, 17 aktiv sind oder nicht. Dies kann das tragbare Kommunikationsgerät 2 anhand einer zeitlichen Abfolge von Bildern der Frontkamera 9 feststellen. Es erweist sich jedoch als besonders vorteilhaft, wenn das tragbare Kommunikationsgerät 2 anhand der zeitlichen Abfolge von Bildern auch eine Frequenz und/oder eine Geschwindigkeit der Bewegung der Scheibenwischer 16, 17 ermittelt. Dann kann das tragbare Kommunikationsgerät 2 auch auf eine Intensität des Regens zurückschließen.

Die Information über den Bewegungszustand der Scheibenwischer 16, 17 wird durch das tragbare Kommunikationsgerät 2 beim Unterstützen des Fahrers beim Führen des Kraftfahrzeugs 1 berücksichtigt. Die Recheneinrichtung 5 kann abhängig von den Bilddaten der Frontkamera 9 beispielsweise folgende Funktionalitäten zur Unterstützung des Fahrers bereitstellen: Die Recheneinrichtung 5 kann auf dem Display 3 des Mobiltelefons 2 und/oder auf der Anzeigeinrichtung 12 direkt Bilder anzeigen, die den durch die Kamera 9 aufgenommenen Bildern entsprechen. Die Recheneinrichtung 5 kann die Bilddaten der Frontkamera 9 auch einer Mustererkennung unterziehen, um ein Verkehrszeichen zu erkennen. Nach Erkennen eines Verkehrszeichens kann die Recheneinrichtung 5 ein dieses erkannte Verkehrszeichen wiedergebendes Bild auf dem Display 3 und/oder auf der Anzeigeinrichtung 12 anzeigen und/oder ein das erkannte Verkehrszeichen charakterisierendes akustisches Signal ausgeben. Abhängig von den Bilddaten der Frontkamera 9 kann die Recheneinrichtung 5 auch Fahrbahnmarkierungen erkennen. Die Recheneinrichtung 5 kann dann ein bevorstehendes oder ein bereits erfolgtes Überfahren einer erkannten Fahrbahnmarkierung durch das Kraftfahrzeug 1 feststellen und ein akustisches Signal als Warnung ausgeben und/oder Steuerdaten an den Vibrationsaktuator 14 übermitteln. Dann wird der Fahrer durch den Vibrationsaktuator 14 vor dem möglichen Überfahren der Fahrbahnmarkierung gewarnt. Anhand der Bilddaten der Frontkamera 9 kann die Recheneinrichtung 5 auch vor dem Kraftfahrzeug 1 befindliche Hindernisse erkennen und den Fahrer gegebenenfalls warnen, nämlich mit Hilfe des Vibrationsaktuators 14 und/oder eines akustischen Signals und/oder einer entsprechenden Anzeige auf dem Display 3 und/oder der Anzeigeeinrichtung 12. Die Recheneinrichtung 5 kann auch anhand der Bilddaten einen Abstand zwischen dem Hindernis und dem Kraftfahrzeug 1 bestimmen und den Fahrer dann warnen, wenn dieser Abstand einen Grenzwert bzw. eine Schwelle unterschreitet.

Die Berücksichtigung des Bewegungszustands der Scheibenwischer 16, 17 beim unterstützen des Fahrers kann beispielsweise so aussehen: Im Allgemeinen kann die Recheneinrichtung 5 den Fahrer bei einem starken Regen früher als bei einem schwachen Regen oder bei einer trockenen Straße vor der Anwesenheit von Hindernissen und/oder vor einem bevorstehenden oder einem bereits erfolgten Überfahren einer Fahrbahnmarkierung warnen. Beispielsweise kann die Schwelle für den Abstand zwischen dem Hindernis und dem Kraftfahrzeug 1 in Abhängigkeit von dem Bewegungszustand der Scheibenwischer 16, 17, insbesondere in Abhängigkeit von der Frequenz und/oder der Geschwindigkeit der Bewegung, eingestellt werden. Es kann die Beziehung gelten, dass je stärker der Regen ist, desto größer die Schwelle für den Abstand ist.

Abhängig von dem Bewegungszustand der Scheibenwischer 16, 17 kann auch zumindest eine Eigenschaft bzw. ein Parameter der angezeigten Bilder eingestellt werden, nämlich z.B. ein Helligkeitsgrad der Bilder.

Wie bereits ausgeführt, kann die Recheneinrichtung 5 auch Verkehrsschilder anhand der Bilddaten der Frontkamera 9 erkennen. Wird beispielsweise ein Verkehrszeichen betreffend eine Geschwindigkeitsbegrenzung erkannt, so kann dieses Zeichen auf dem Display 3 und/oder auf der Anzeigeeinrichtung 12 angezeigt werden. Wird nun ein Regen erkannt, so kann das tragbare Kommunikationsgerät 2 den Fahrer darüber informieren, dass gegebenenfalls weitere Geschwindigkeitsbegrenzungen aufgrund des Regens vorgesehen sind. Dies kann z. B. abhängig von dem Aufenthaltsort bzw. von dem Land erfolgen, in welchem sich das Kraftfahrzeug 1 aufhält. Beispielsweise beträgt die maximal zulässige Geschwindigkeit auf einer französischen Autobahn 130 km/h. Diese Begrenzung gilt jedoch lediglich für eine trockene Straße. Beim Regen beträgt diese Geschwindigkeit lediglich 110 km/h. Gerade darüber kann das tragbare Kommunikationsgerät 2 den Fahrer informieren.

Die Erfindung ist nicht auf die in der Zeichnung dargestellten Ausführungsbeispiele beschränkt. Alle vorstehend im allgemeinen Teil der Beschreibung beschriebenen und in der Zeichnung dargestellten Merkmale und Merkmalskombinationen sind miteinander kombinierbar, sodass diesbezüglich derart gebildete Ausführungsformen als offenbart anzusehen sind. Insbesondere können anhand der im allgemeinen Teil der Beschreibung genannten Merkmale und Merkmalskombinationen neue Ausführungsbeispiele generiert werden, nämlich auch solche, die nicht explizit in der Zeichnung dargestellt sind. Merkmale und Merkmalskombinationen der mit der Figurenbeschreibung offenbarten Ausführungsbeispiele können mit Merkmalen und Merkmalskombinationen, die im allgemeinen Teil der Beschreibung offenbart sind, zu neuen als offenbart anzusehenden Ausführungsbeispielen kombiniert werden.

## Patentansprüche

1. Nachrüstsystem (10) für ein Kraftfahrzeug (1), mit einem tragbaren Kommunikationsgerät (2) zum Bereitstellen zumindest einer Funktionalität, welche einen Fahrer beim Führen des Kraftfahrzeugs (1) unterstützt,
**dadurch gekennzeichnet, dass**
das tragbare Kommunikationsgerät (2) dazu ausgelegt ist, anhand von Bilddaten einer Kamera (9) auf einen Bewegungszustand eines Scheibenwischers (16, 17) des Kraftfahrzeugs (1) zurück zu schließen und diesen Bewegungszustand beim Bereitstellen der zumindest einen Funktionalität zu berücksichtigen,
und das Nachrüstsystem (10) eine vom tragbaren Kommunikationsgerät (2) separate Kamera (9) mit einer Kommunikationsschnittstelle (11) zur drahtlosen Datenübertragung als eine Nachrüstkomponente, insbesondere zum Platzieren hinter einer Windschutzscheibe (7), umfasst, mit welcher das Kraftfahrzeug (1) nachrüstbar ist und welche dazu ausgelegt ist, Bilddaten drahtlos an das tragbare Kommunikationsgerät (2) zu übertragen, wobei das tragbare Kommunikationsgerät (2) dazu ausgelegt ist, anhand der Bilddaten der separaten Kamera (9) auf den Bewegungszustand des Scheibenwischers (16, 17) zurück zu schließen.

2. Nachrüstsystem (10) nach Anspruch 1,
**dadurch gekennzeichnet, dass**
das tragbare Kommunikationsgerät (2) ein Mobiltelefon oder ein mobiler Personalcomputer ist.

3. Nachrüstsystem (10) nach Anspruch 1 oder 2,
**dadurch gekennzeichnet, dass**
das tragbare Kommunikationsgerät (2) eine in dieses integrierte Kamera zum Erfassen von Bilddaten umfasst und dazu ausgelegt ist, anhand der Bilddaten der integrierten Kamera auf den Bewegungszustand des Scheibenwischers (16, 17) zurück zu schließen.

4. Nachrüstsystem (10) nach einem der vorhergehenden Ansprüche,
**dadurch gekennzeichnet, dass**
das tragbare Kommunikationsgerät (2) dazu ausgelegt ist, anhand der Bilddaten auf eine Frequenz und/oder eine Geschwindigkeit einer Bewegung des Scheibenwischers (16, 17) zurück zu schließen.

5. Nachrüstsystem (10) nach einem der vorhergehenden Ansprüche,
**gekennzeichnet durch**
eine Erfassungseinrichtung (9) als Nachrüstkomponente, mit welcher das Kraftfahrzeug (1) nachrüstbar ist und welche zum Erfassen von Daten über einen Umgebungsbereich des Kraftfahrzeugs (1) und zum Übertragen der Daten an das tragbare Kommunikationsgerät (2) ausgebildet ist, wobei das tragbare Kommunikationsgerät (2) dazu ausgelegt ist, abhängig von diesen Daten und unter Berücksichtigung des Bewegungszustands des Scheibenwischers (16, 17) zumindest eine Funktionalität bereitzustellen, die den Fahrer beim Führen des Fahrzeugs unterstützt.

6. Nachrüstsystem (10) nach Anspruch 5,
**dadurch gekennzeichnet, dass**
das tragbare Kommunikationsgerät (2) dazu ausgelegt ist, abhängig von den Daten der Erfassungseinrichtung (9) und unter Berücksichtigung des Bewegungszustands des Scheibenwischers (16, 17) Steuerdaten zu erzeugen, die Steuerdaten an zumindest eine weitere Nachrüstkomponente (12, 14) zu übertragen und hierdurch die zumindest eine weitere Nachrüstkomponente (12, 14) anzusteuern.

7. Nachrüstsystem (10) nach Anspruch 5 oder 6,
**dadurch gekennzeichnet, dass**
das tragbare Kommunikationsgerät (2) dazu ausgelegt ist, anhand der Daten der Erfassungseinrichtung (9) ein fahrzeugexternes Hindernis zu erkennen und unter Berücksichtigung des Bewegungszustands des Scheibenwischers (16, 17) eine Information über das erkannte Hindernis auszugeben.

8. Nachrüstsystem (10) nach Anspruch 7,
**dadurch gekennzeichnet, dass**
das tragbare Kommunikationsgerät (2) dazu ausgelegt ist, anhand der Daten der Erfassungseinrichtung (9) eine Entfernung zwischen dem Hindernis und dem Kraftfahrzeug (1) zu bestimmen und den Fahrer dann zu warnen, wenn die Entfernung eine Schwelle unterschreitet.

9. Nachrüstsystem (10) nach Anspruch 8,
**dadurch gekennzeichnet, dass**
das tragbare Kommunikationsgerät (2) dazu ausgelegt ist, die Schwelle für die Entfernung in Abhängigkeit von dem Bewegungszustand des Scheibenwischers (16, 17) einzustellen.

10. Nachrüstsystem (10) nach einem der vorhergehenden Ansprüche,
**gekennzeichnet durch**
eine Frontkamera (9) als Nachrüstkomponente zur Aufnahme von Bilddaten über einen Umgebungsbereich des Kraftfahrzeugs (1), insbesondere zum Platzieren hinter einer Windschutzscheibe (7) des Kraftfahrzeugs (1), wobei die Bilddaten an das tragbare Kommunikationsgerät (2) übertragbar sind und das tragbare Kommunikationsgerät (2) dazu ausgelegt ist, abhängig von den Bilddaten der Frontkamera (9) und unter Berücksichtigung des Bewegungszustands des Scheibenwischers (16, 17) zumindest eine Funktionalität bereitzustellen, die den Fahrer beim Führen des Fahrzeugs unterstützt.

11. Nachrüstsystem (10) nach Anspruch 10,
**dadurch gekennzeichnet, dass**
das tragbare Kommunikationsgerät (2) dazu ausgelegt ist, zum Erkennen eines Verkehrszeichens die Bilddaten der Frontkamera (9) einer Mustererkennung zu unterziehen und unter Berücksichtigung des Bewegungszustands des Scheibenwischers (16, 17) eine Information über das Verkehrszeichen auszugeben.

12. Nachrüstsystem (10) nach Anspruch 10 oder 11,
**dadurch gekennzeichnet, dass**
das tragbare Kommunikationsgerät (2) dazu ausgelegt ist, abhängig von den Bilddaten ein fahrzeugexternes Hindernis zu erkennen und unter Berücksichtigung des Bewegungszustands des Scheibenwischers (16, 17) den Fahrer über das erkannte Hindernis zu informieren.

13. Verfahren zum Unterstützen eines Fahrers eines Kraftfahrzeugs (1) beim Führen des Kraftfahrzeugs (1) durch Bereitstellen zumindest einer Funktionalität mithilfe eines tragbaren Kommunikationsgerätes (2),
**dadurch gekennzeichnet, dass**
anhand von Bilddaten einer Kamera (9) durch das tragbare Kommunikationsgerät (2) auf einen Bewegungszustand eines Scheibenwischers (16, 17) des Kraftfahrzeugs (1) zurückgeschlossen wird und dieser Bewegungszustand beim Bereitstellen der zumindest einen Funktionalität berücksichtigt wird.

## Claims

1. Upgrade system (10) for a motor vehicle (1), having a portable communication appliance (2) for providing at least one functionality which assists a driver in driving the motor vehicle (1),
**characterized in that**
the portable communication appliance (2) is designed to use image data from a camera (9) to infer a state of movement of a windscreen wiper (16, 17) on the motor vehicle (1) and can factor in this state of movement when providing the at least one functionality,
and the upgrade system (10) comprises a camera (9) which is separate from the portable communication appliance (2) and which has a communication interface (11) for wireless data transmission as an upgrade component, particularly for placement behind a windscreen (7), which can be used to upgrade the motor vehicle (1) and which is designed to transmit image data wirelessly to the portable communication appliance (2), wherein the portable communication appliance (2) is designed to use the image data from the separate camera (9) to infer the state of movement of the windscreen wiper (16, 17).

2. Upgrade system (10) according to Claim 1,
**characterized in that**
the portable communication appliance (2) is a mobile telephone or a mobile personal computer.

3. Upgrade system (10) according to Claim 1 or 2,
**characterized in that**
the portable communication appliance (2) comprises a camera integrated therein for the purpose of capturing image data and is designed to use the image data from the integrated camera to infer the state of movement of the windscreen wiper (16, 17).

4. Upgrade system (10) according to one of the preceding claims,
**characterized in that**
the portable communication appliance (2) is designed to use the image data to infer a frequency and/or a speed of movement of the windscreen wiper (16, 17).

5. Upgrade system (10) according to one of the preceding claims,
**characterized by**
a capture device (9) as an upgrade component which can be used to upgrade the motor vehicle (1) and which is designed to capture data about a surrounding area for the motor vehicle (1) and to transmit the data to the portable communication appliance (2), wherein the portable communication appliance (2) is designed to take these data as a basis, and to factor in the state of movement of the windscreen wiper (16, 17), for providing at least one functionality which assists the driver in driving the vehicle.

6. Upgrade system (10) according to Claim 5,
**characterized in that**
the portable communication appliance (2) is designed to take the data from the capture device (9) as a basis, and to factor in the state of movement of the windscreen wiper (16, 17), for producing control data, for transmitting the control data to at least one further upgrade component (12, 14) and thereby for actuating the at least one further upgrade component (12, 14).

7. Upgrade system (10) according to Claim 5 or 6,
**characterized in that**
the portable communication appliance (2) is designed to use the data from the capture device (9) to identify an obstacle that is external to the vehicle and to factor in the state of movement of the windscreen wiper (16, 17) to output a piece of information about the identified obstacle.

8. Upgrade system (10) according to Claim 7,
**characterized in that**
the portable communication appliance (2) is designed to use the data from the capture device (9) to determine a distance between the obstacle and the motor vehicle (1) and to warn the driver if the distance is below a threshold.

9. Upgrade system (10) according to Claim 8,
**characterized in that**
the portable communication appliance (2) is designed to set the threshold for the distance on the basis of the state of movement of the windscreen wiper (16, 17).

10. Upgrade system (10) according to one of the preceding claims,
**characterized by**
a front camera (9) as an upgrade component for recording image data about a surrounding area for the motor vehicle (1), particularly for placement behind a windscreen (7) of the motor vehicle (1), wherein the image data can be transmitted to the portable communication appliance (2), and the portable communication appliance (2) is designed to take the image data from the front camera (9) as a basis, and to factor in the state of movement of the windscreen wiper (16, 17), for providing at least one functionality which assists the driver in driving the vehicle.

11. Upgrade system (10) according to Claim 10,
**characterized in that**
the portable communication appliance (2) is designed to identify a road sign by subjecting the image data from the front camera (9) to pattern recognition and to factor in the state of movement of the windscreen wiper (16, 17) to output a piece of information about the road sign.

12. Upgrade system (10) according to Claim 10 or 11,
**characterized in that**
the portable communication appliance (2) is designed to take the image data as a basis for identifying an obstacle that is external to the vehicle and to factor in the state of movement of the windscreen wiper (16, 17) to inform the driver about the identified obstacle.

13. Method for assisting a driver of a motor vehicle (1) in driving the motor vehicle (1) by providing at least one functionality using a portable communication appliance (2),
**characterized in that**
image data from a camera (9) are used by the portable communication appliance (2) to infer a state of movement of a windscreen wiper (16, 17) of the motor vehicle (1), and this state of movement is factored in when providing the at least one functionality.

## Revendications

1. Système de complément d'équipement (10) pour un véhicule automobile (2), comprenant un appareil de communication portable (2) destiné à fournir au moins une fonctionnalité qui assiste un conducteur lors de la conduite du véhicule automobile (1),
**caractérisé en ce que**
l'appareil de communication portable (2) est conçu pour déduire un état de mouvement d'un essuie-glace (16, 17) du véhicule automobile (1) à l'aide de données d'image d'une caméra (9) et pour tenir compte de cet état de mouvement lors de la fourniture de l'au moins une fonctionnalité,
et le système de complément d'équipement (10) comprend une caméra (9) séparée de l'appareil de communication portable (2) munie d'une interface de communication (11) destinée à la transmission de données sans fil sous la forme d'un composant de complément d'équipement, notamment destinée à être placée derrière un pare-brise (7), de laquelle le véhicule automobile (1) peut être équipé postérieurement et laquelle est conçue pour transmettre des données d'image sans fil à l'appareil de communication portable (2), l'appareil de communication portable (2) étant conçu pour déduire l'état de mouvement de l'essuie-glace (16, 17) à l'aide des données d'image de la caméra (9) séparée.

2. Système de complément d'équipement (10) selon la revendication 1, **caractérisé en ce que** l'appareil de communication portable (2) est un téléphone mobile ou un ordinateur personnel mobile.

3. Système de complément d'équipement (10) selon la revendication 1 ou 2, **caractérisé en ce que** l'appareil de communication portable (2) comprend une caméra intégrée dans celui-ci pour l'acquisition de données d'image et est conçu pour déduire l'état de mouvement de l'essuie-glace (16, 17) à l'aide des données d'image de la caméra intégrée.

4. Système de complément d'équipement (10) selon l'une des revendications précédentes, **caractérisé en ce que** l'appareil de communication portable (2) est conçu pour déduire une fréquence et/ou une vitesse d'un mouvement de l'essuie-glace (16, 17) à l'aide des données d'image.

5. Système de complément d'équipement (10) selon l'une des revendications précédentes, **caractérisé par** un dispositif d'acquisition (9) sous la forme d'un composant de complément d'équipement, duquel le véhicule automobile (1) peut être équipé postérieurement et lequel est conçu pour acquérir des données sur une zone environnante du véhicule automobile (1) et pour transmettre les données à l'appareil de communication portable (2), l'appareil de communication portable (2) étant conçu pour, en fonction de ces données et en tenant compte de l'état de mouvement de l'essuie-glace (16, 17), fournir au moins une fonctionnalité qui assiste le conducteur lors de la conduite du véhicule.

6. Système de complément d'équipement (10) selon la revendication 5, **caractérisé en ce que** l'appareil de communication portable (2) est conçu pour, en fonction des données du dispositif d'acquisition (9) et en tenant compte de l'état de mouvement de l'essuie-glace (16, 17), produire des données de commande, transmettre les données de commande à au moins un composant de complément d'équipement (12, 14) supplémentaire et commander ainsi l'au moins un composant de complément d'équipement (12, 14) supplémentaire.

7. Système de complément d'équipement (10) selon la revendication 5 ou 6, **caractérisé en ce que** l'appareil de communication portable (2) est conçu pour, à l'aide des données du dispositif d'acquisition (9), détecter un obstacle extérieur au véhicule et délivrer une information sur l'obstacle détecté en tenant compte de l'état de mouvement de l'essuie-glace (16, 17).

8. Système de complément d'équipement (10) selon la revendication 7, **caractérisé en ce que** l'appareil de communication portable (2) est conçu pour, à l'aide des données du dispositif d'acquisition (9), déterminer une distance entre l'obstacle et le véhicule automobile (1) et alerter le conducteur lorsque la distance devient inférieure à un seuil.

9. Système de complément d'équipement (10) selon la revendication 8, **caractérisé en ce que** l'appareil de communication portable (2) est conçu pour régler le seuil de la distance en fonction de l'état de mouvement de l'essuie-glace (16, 17).

10. Système de complément d'équipement (10) selon l'une des revendications précédentes, **caractérisé par** une caméra frontale (9) sous la forme d'un composant de complément d'équipement servant à enregistrer des données d'image sur une zone environnante du véhicule automobile (1), notamment destinée à être placée derrière un pare-brise (7) du véhicule automobile (1), les données d'image pouvant être transmises à l'appareil de communication portable (2) et l'appareil de communication portable (2) étant conçu pour, en fonction des données d'image de la caméra frontale (9) et en tenant compte de l'état de mouvement de l'essuie-glace (16, 17), fournir au moins une fonctionnalité qui assiste le conducteur lors de la conduite du véhicule.

11. Système de complément d'équipement (10) selon la revendication 10, **caractérisé en ce que** l'appareil de communication portable (2) est conçu pour soumettre les données d'image de la caméra frontale (9) à une reconnaissance de modèle en vue de reconnaître un panneau de signalisation routière et délivrer une information sur le panneau de signalisation routière en tenant compte de l'état de mouvement de l'essuie-glace (16, 17).

12. Système de complément d'équipement (10) selon la revendication 10 ou 11, **caractérisé en ce que** l'appareil de communication portable (2) est conçu pour, en fonction des données d'image, détecter un obstacle extérieur au véhicule et informer le conducteur à propos de l'obstacle détecté en tenant compte de l'état de mouvement de l'essuie-glace (16, 17).

13. Procédé d'assistance d'un conducteur d'un véhicule automobile (1) lors de la conduite du véhicule automobile (1) en fournissant au moins une fonctionnalité à l'aide d'un appareil de communication portable (2), **caractérisé en ce qu'**un état de mouvement de l'essuie-glace (16, 17) du véhicule automobile (1) est déduit par l'appareil de communication portable (2) à l'aide de données d'image d'une caméra (9) et cet état de mouvement est pris en compte lors de la fourniture de l'au moins une fonctionnalité.
